# EUROPEAN PATENT APPLICATION

(11) **EP 4 641 073 A1**
(43) Date of publication of application: **29.10.2025**
(21) Application number: 24386048.3
(22) Date of filing: 25.04.2024
(51) Int. Cl.: F17C 13/12, B64D 37/30

(54) **A METHOD OF CONTROLLING PRESSURE IN A HYDROGEN FUEL TANK**

(71) Applicant: Airbus Operations Limited, Bristol BS34 7PA (GB)
(72) Inventor: PAPADOPOULOS, Christopher, Bristol, BS34 7PA (GB)
(74) Representative: Farrow, James Anthony

(57) **Abstract**

Disclosed is a method of controlling a pressure in a hydrogen fuel tank (10) of an aircraft hydrogen fuel system (2). The hydrogen fuel tank stores hydrogen fuel. The method comprises receiving leak information indicative of a leak of hydrogen fuel from the hydrogen fuel system. The method also comprises, based on the leak information received, causing control of the pressure in the hydrogen fuel tank.

## Description

### TECHNICAL FIELD

The present invention relates to methods, particularly computer-implemented methods, for controlling pressure in a hydrogen fuel tank, to hydrogen fuel system controllers comprising processors configured to perform such methods, to hydrogen fuel systems comprising such hydrogen fuel system controllers, and to aircraft comprising hydrogen fuel system controllers and/or hydrogen fuel systems.

### BACKGROUND

Hydrogen fuel systems of aircraft typically comprise a hydrogen fuel tank storing hydrogen fuel under cryogenic conditions. Such hydrogen fuel systems are configured to distribute the stored hydrogen fuel to consumer units of the aircraft, such as engines and/or generators of the aircraft, to power such engines and/or generators.

### SUMMARY

A first aspect of the present invention provides a method of controlling a pressure in a hydrogen fuel tank of an aircraft hydrogen fuel system, the hydrogen fuel tank storing hydrogen fuel, the method comprising: receiving leak information indicative of a leak of hydrogen fuel from the hydrogen fuel system; and based on the leak information received, causing control of the pressure in the hydrogen fuel tank.

As hydrogen fuel leaks from the hydrogen fuel tank, the pressure in the hydrogen fuel tank may decrease. The causing control of the pressure in the hydrogen fuel tank may provide improved versatility in the event of a leak compared to an uncontrolled reduction in pressure. For instance, the causing control of the pressure in the hydrogen fuel tank may permit control of an amount of the hydrogen fuel in the hydrogen fuel tank during the leak, which may in turn allow actions to be taken to provide a desired amount of fuel in the hydrogen fuel tank in the event of the leak.

Optionally, the causing control of the pressure in the hydrogen fuel tank comprises causing control of a pressure of the hydrogen fuel in the hydrogen fuel tank. This may, in turn, provide control of a pressure of hydrogen fuel at a point in the hydrogen fuel system where the hydrogen fuel is leaking into an atmosphere external to the hydrogen fuel system. This may permit actions to be taken to control an amount of hydrogen fuel passing from the hydrogen fuel system into the atmosphere and, as a result, an amount of hydrogen fuel in the hydrogen fuel tank during the leak. This may provide a versatile hydrogen fuel tank and/or hydrogen fuel system that is resilient to leaks in hydrogen fuel from the hydrogen fuel system.

Optionally, the hydrogen fuel is stored under cryogenic conditions in the hydrogen fuel tank. Optionally, the hydrogen fuel tank comprises liquid hydrogen fuel stored therein. Optionally, the hydrogen fuel tank comprises gaseous hydrogen fuel stored therein. Optionally, the causing control of the pressure in the hydrogen fuel in the hydrogen fuel tank comprises causing control of a pressure of the liquid and/or the gaseous hydrogen fuel stored in the hydrogen fuel tank.

Optionally, the causing control of the pressure in the hydrogen fuel tank comprises causing the pressure in the hydrogen fuel tank to exceed an external pressure of an atmosphere into which the hydrogen fuel is leaking.

By providing a pressure in the hydrogen fuel tank that exceeds the external pressure, an ability of the atmosphere to ingress into the hydrogen fuel tank may be limited. This may reduce a likelihood of the atmosphere mixing with the hydrogen fuel in the hydrogen fuel tank.

Optionally, the causing the pressure in the hydrogen fuel tank to exceed the external pressure comprises causing a pressure of the hydrogen fuel in the hydrogen fuel tank to exceed the external pressure. This may cause the hydrogen fuel to pass into the atmosphere from the hydrogen fuel tank at the source of the leak, and prevent (or reduce a likelihood of) an ingress of the atmosphere into the hydrogen fuel tank.

Optionally, the method comprises causing the pressure in the hydrogen fuel tank to exceed the external pressure of the atmosphere into which the hydrogen fuel is leaking while a quantity of the hydrogen fuel in the hydrogen fuel tank remains above a threshold quantity.

Causing the pressure in the hydrogen fuel tank (and/or the pressure of the hydrogen fuel in the hydrogen fuel tank) to exceed the external pressure as such may ensure that the atmosphere is unable to ingress into the hydrogen fuel tank until the quantity of hydrogen fuel in the hydrogen fuel tank reaches or drops below the threshold quantity. In this way, the method may provide a quantity of hydrogen fuel in the hydrogen fuel tank that is at or below the threshold quantity at a time when atmosphere is able to ingress into the hydrogen fuel tank and react with the hydrogen fuel. The ability to provide a desired quantity of hydrogen fuel in the hydrogen fuel tank may permit control of an energy released in a reaction of the hydrogen fuel tank with the atmosphere in the event of such an ingress, thereby to improve a longevity of the hydrogen fuel tank.

In particular, the threshold quantity may be less than a quantity that may otherwise be present in the hydrogen fuel tank when the pressure in the hydrogen fuel tank meets, or drops below, the external pressure, absent the causing control of the pressure in the hydrogen fuel tank. In this way, less hydrogen fuel may be present in the hydrogen fuel tank at a time when the atmosphere is able to ingress into the hydrogen fuel than if the pressure in the hydrogen fuel tank weren't caused to be controlled. This, in turn, may reduce an amount of energy released in a reaction of hydrogen fuel in the hydrogen fuel tank with the atmosphere, in the event that the atmosphere ingresses into the hydrogen fuel tank. This may improve a longevity of the hydrogen fuel system and/or the hydrogen fuel tank.

The quantity of hydrogen fuel in the hydrogen fuel tank comprises a mass and/or a number of moles of hydrogen fuel in the hydrogen fuel tank.

Optionally, the causing control of the pressure in the hydrogen fuel tank comprises causing heating of the hydrogen fuel in the hydrogen fuel tank. A pressure of the hydrogen fuel in the hydrogen fuel tank may increase in proportion to a temperature of the hydrogen fuel in the hydrogen fuel tank. Because the hydrogen fuel is typically stored in the hydrogen fuel tank at cryogenic temperatures, a required temperature of a heat source for heating the hydrogen fuel may be correspondingly low. For instance, the hydrogen fuel may be heated by a fuel source that is at or even below a temperature of the atmosphere external to the hydrogen fuel tank, such as an ambient air external to the aircraft - even when the aircraft is at cruising altitude. In this way, the causing the heating of the hydrogen fuel provides a convenient and energy-efficient way to cause control of the pressure in the hydrogen fuel tank.

Optionally, the hydrogen fuel comprises gaseous hydrogen fuel, and the causing heating of the hydrogen fuel in the hydrogen fuel tank comprises causing heating of the gaseous hydrogen fuel. An increase in a temperature of the gaseous hydrogen fuel may increase a pressure of the gaseous hydrogen fuel in the hydrogen fuel tank.

Optionally, the hydrogen fuel comprises liquid hydrogen fuel, and the causing heating of the hydrogen fuel in the hydrogen fuel tank comprises evaporating some or all of the liquid hydrogen fuel. This may increase an amount of gaseous hydrogen fuel in the hydrogen fuel tank, which may increase a pressure of the gaseous hydrogen fuel in the hydrogen fuel tank.

Optionally, the causing heating of the hydrogen fuel in the hydrogen fuel tank comprises causing hydrogen fuel to pass from the hydrogen fuel tank through a heat exchanger and back to the hydrogen fuel tank.

In this way, an amount of hydrogen fuel caused to flow through the heat exchanger, and/or an amount of heat provided to the hydrogen fuel in the heat exchanger, may be controlled. This may, in turn, permit predictable and/or precise control of a temperature of the hydrogen fuel in the hydrogen fuel tank, and so also of the pressure in the hydrogen fuel tank. Moreover, causing the hydrogen fuel to pass from the hydrogen fuel tank through the heat exchanger and back to the hydrogen fuel tank may allow liquid hydrogen fuel from the hydrogen fuel tank to be heated in the heat exchanger and returned to the hydrogen fuel tank as gaseous hydrogen fuel. Because gaseous hydrogen fuel is more compressible than liquid hydrogen fuel, providing gaseous hydrogen fuel back to the hydrogen fuel tank may permit a higher pressure to be achieved in the hydrogen fuel tank than if only liquid hydrogen were to be returned to the hydrogen fuel tank.

Optionally, the causing heating of the hydrogen fuel comprises causing a heat exchange medium to flow through the heat exchanger to cause heat to be transferred between the hydrogen fuel and the heat exchange medium in the heat exchanger. This may provide efficient heating of the hydrogen fuel. For instance, the heat exchange medium may comprise a fluid from another system of the aircraft comprising the hydrogen fuel system, such as a cooling system of an engine of the aircraft. For instance, the heat exchange medium may be heated by using the heat exchange medium to cool a component of the aircraft, such as a part of an engine of the aircraft or a component of the hydrogen fuel system, before being passed through the heat exchanger. Optionally, the causing heating of the hydrogen fuel comprises causing the heat exchange medium to pass through a further heat exchanger to cause heating of the heat exchange medium. For instance, the causing heating of the hydrogen fuel system may comprise causing heat to be exchanged, in the further heat exchanger, between the heat exchange medium and a further fluid, such as the atmosphere external to the hydrogen fuel tank, such as ambient air. Alternatively, the heat exchange medium may comprise heated hydrogen fuel that has been heated during transfer of the heated hydrogen fuel through the hydrogen fuel system, such as towards the engine of the aircraft. In any case, heat already present in such a heat exchange medium may be used to heat the hydrogen fuel in the heat exchanger, providing an efficient utilisation of existing heat energy.

Optionally, the causing hydrogen fuel to pass from the hydrogen fuel tank through the heat exchanger and back to the hydrogen fuel tank comprises causing operation of a pump to pump the hydrogen fuel through the heat exchanger and back to the hydrogen fuel tank. Optionally, the causing hydrogen fuel to pass from the hydrogen fuel tank through the heat exchanger and back to the hydrogen fuel tank comprises causing operation of one or more valves to permit the flow of hydrogen fuel from the hydrogen fuel tank through the heat exchanger and back to the hydrogen fuel tank. Optionally, the causing heating of hydrogen fuel in the hydrogen fuel tank comprises supplying heated hydrogen fuel to the hydrogen fuel tank from an engine of the aircraft. The engine may comprise a hydrogen combustion engine and/or a hydrogen fuel cell. The hydrogen fuel may comprise surplus and/or unspent hydrogen fuel from the engine.

Optionally, the method comprises causing heating of a heat exchanger heating element of the heat exchanger, such as an electric heating element of the heat exchanger. This may provide a lightweight heat hydrogen fuel system, such as a hydrogen fuel system absent pipework for passing the heat exchange medium through the heat exchanger. Alternatively, causing heating of the heat exchanger heating element may supplement heat provided by the heat exchange medium, providing increased heat transfer to the hydrogen fuel in the heat exchanger.

The causing heating of the hydrogen fuel may comprise causing operation of a fuel tank heating element located in the hydrogen fuel tank to cause direct heating of the hydrogen fuel in the hydrogen fuel tank. This may provide a lightweight hydrogen fuel system, such as a hydrogen fuel system absent pipework, valves and/or other components for passing the hydrogen fuel through the heat exchanger. Alternatively, causing heating of the hydrogen fuel tank heating element may supplement heat provided by the heat exchanger, providing increased heating of the hydrogen fuel, or backup heating in the event that heating via the heat exchanger is unavailable.

Optionally, the causing heating of the hydrogen fuel in the hydrogen fuel tank comprises causing an increase in a thermal conductivity of the hydrogen fuel tank. This may increase a rate of heat transfer between the hydrogen fuel in the hydrogen fuel tank and the atmosphere external to the hydrogen fuel tank (which may be the atmosphere into which the hydrogen fuel is leaking). The atmosphere may be at a higher temperature than the hydrogen fuel in the hydrogen fuel tank. For instance, the hydrogen fuel may be stored as cryogenic liquid hydrogen in the hydrogen fuel tank, and the atmosphere may be atmospheric air at a temperature greater than or equal to a temperature external to the aircraft in which the hydrogen fuel tank is comprised.

Once the thermal conductivity of the hydrogen fuel tank is caused to increase, the fuel in the hydrogen fuel tank may be passively heated. For instance, by causing an increase in the thermal conductivity of the hydrogen fuel tank, the hydrogen fuel may be caused to heat up without requiring operation of a pump for pumping the hydrogen (or a heat exchange medium) through a heat exchanger such as that described above, and/or without providing energy to an electric heater in the hydrogen fuel tank. This may therefore provide an energy-efficient way to cause heating of the hydrogen fuel in the hydrogen fuel tank.

Alternatively, the causing the increase in the thermal conductivity of the hydrogen fuel tank may provide redundancy in the event that the heat exchanger, components for causing hydrogen fuel to flow through the heat exchanger, and/or the hydrogen fuel tank heating element described above are unavailable.

Optionally, the hydrogen fuel tank comprises an inner wall, an outer wall, and a vacuum in a space between the inner wall and the outer wall, and the causing the increase in the thermal conductivity of the hydrogen fuel tank comprises relieving the vacuum in the space.

The vacuum may normally thermally insulate the hydrogen fuel from the atmosphere external to the hydrogen fuel tank, which may help to maintain the hydrogen fuel in a cryogenic liquid state in the hydrogen fuel tank. Thus, by relieving the vacuum, the thermal conductivity of the hydrogen fuel tank may be increased, leading to an increased rate of heat transfer between the hydrogen fuel in the hydrogen fuel tank and the atmosphere external to the hydrogen fuel tank.

Optionally, the relieving the vacuum in the space comprises causing operation of a vacuum breather valve to permit an atmosphere external to the hydrogen fuel tank to pass into the space via the vacuum breather valve. In this way, the atmosphere may be in direct contact with the inner and outer walls, thereby increasing a rate of heat transfer between the atmosphere and the hydrogen fuel in the hydrogen fuel tank across the inner and outer walls of the hydrogen fuel tank. This may provide a reliable way of causing heating of the hydrogen fuel, for instance in the event that an alternative heater, such as a heat exchanger and/or a heating element as described above, is unavailable.

Optionally, the relieving the vacuum in the space comprises injecting a thermally conductive fluid, such as a thermally conductive liquid or gas, into the space. Optionally, the thermally conductive liquid or gas is inert. This may reduce a likelihood of a reaction between the thermally conductive fluid in the interspace and hydrogen in the fuel tank, such as in the event of a leak of hydrogen fuel into the interspace.

Optionally, the leak information received is indicative of any one or more of: a flow rate of hydrogen fuel from the hydrogen fuel tank; a pressure of hydrogen fuel in the hydrogen fuel tank; and a concentration of hydrogen external to the hydrogen fuel system.

For instance, a non-zero flow rate of hydrogen fuel through a vent line from the hydrogen fuel tank may be indicative of a leakage of fuel through the vent line, particularly if the pressure in the hydrogen fuel tank is less than that normally required to cause hydrogen to flow through the vent line. The presence of hydrogen external to the hydrogen fuel system, and/or an increase in a concentration of hydrogen external to the hydrogen fuel system, may also be indicative that hydrogen fuel has leaked from the hydrogen fuel system. Receiving the leak information representative of the flow rate of hydrogen fuel from the hydrogen fuel tank and/or the concentration of hydrogen external to the hydrogen fuel system may provide a convenient and/or reliable way of identifying a leak of hydrogen fuel from the hydrogen fuel system.

Moreover, when the leak information is representative of the flow rate of hydrogen fuel from the hydrogen fuel tank, the method may comprise causing the control of pressure in the hydrogen fuel tank to maintain a positive flow rate of hydrogen fuel from the hydrogen fuel tank. This may reduce a likelihood of an ingress of the external atmosphere into the hydrogen fuel tank, at least until the quantity of hydrogen fuel in the hydrogen fuel tank is below the threshold quantity described above.

Optionally, the leak information comprises a fuel consumption of the aircraft, such as a calculated and/or an actual consumption of hydrogen fuel by the aircraft. A mismatch between the calculated and actual consumption may indicate a leak of hydrogen fuel from the aircraft. The leak information may comprise a centre of gravity of the aircraft, such as a calculated and/or actual centre of gravity of the aircraft. A change in the centre of gravity and/or a difference between the calculated and actual centre of gravity of the aircraft may indicate that there is less fuel than expected in the hydrogen fuel tank, which may similarly be indicative of a leak of hydrogen fuel from the hydrogen fuel tank. The leak information may comprise any other values associated with the aircraft that are also indicative of a leakage of fuel from the hydrogen fuel system.

Optionally, the leak information is received from one or more leak detection sensors, such as a flow rate sensor in a line fluidically coupled to the hydrogen fuel tank, a pressure sensor in the hydrogen fuel tank, and/or a hydrogen concentration sensor in the external atmosphere external to the hydrogen fuel tank. Optionally, the receiving the leak information comprises sensing the leak information using the flow rate sensor, the pressure sensor, and/or the hydrogen concentration sensor.

Optionally, the method comprises determining, based on the leak information, that there is a leak of hydrogen fuel from the hydrogen fuel system, such as from the hydrogen fuel tank and/or from pipework or components fluidically connected to the hydrogen fuel tank. Optionally, the method comprises causing the increase in pressure in the hydrogen fuel tank in response to a positive determination that is a leak of hydrogen fuel from the hydrogen fuel system.

Optionally, the determining that there is a leak of hydrogen fuel is performed by a leak detection system, and the information indicative of the leak is received from the leak detection system.

Optionally, the method comprises receiving state information representative of an operational state of the hydrogen fuel tank, the hydrogen fuel system and/or the aircraft comprising the aircraft hydrogen fuel system; and causing the control of the pressure in the hydrogen fuel tank based on the received state information.

In this way, the pressure in the hydrogen fuel tank may be caused to be controlled in a different way depending on the received state information. This may provide a versatile method for causing control of the pressure in the hydrogen fuel tank.

Optionally, the state information is indicative of any one or more of: a pressure external to the hydrogen fuel tank; a quantity of liquid and/or gaseous hydrogen fuel in the hydrogen fuel tank; a rate of consumption of hydrogen fuel in the hydrogen fuel tank by a consumer unit of the aircraft; a temperature in the hydrogen fuel tank; a flight status of the aircraft; and a movement or anticipated movement of the aircraft.

Optionally, when the leak information is representative of the flow rate of hydrogen fuel from the hydrogen fuel tank, and when the state information is representative of the quantity of gaseous and liquid hydrogen fuel in the hydrogen fuel tank and the flight status of the aircraft, such as a distance to a nearest runway, the method comprises causing control of the pressure in the hydrogen fuel tank to provide a desired flow rate of hydrogen fuel from the hydrogen fuel tank, so that the quantity of hydrogen fuel in the hydrogen fuel tank is sufficient for the aircraft to reach the nearest runway. Optionally, the method comprises causing the control of the pressure in the hydrogen fuel tank to provide the desired flow rate of hydrogen fuel from the hydrogen fuel tank so that the quantity of hydrogen fuel in the hydrogen fuel tank is sufficient for passengers to disembark the aircraft before the pressure in the hydrogen fuel tank reaches a point at which the external atmosphere may be able to ingress into the tank..

The method may comprise causing control of a quantity and/or flow rate of hydrogen fuel caused to be moved from the hydrogen fuel tank by the hydrogen fuel system, such as a quantity of fuel transferred from the hydrogen fuel tank to an engine of the aircraft, on the basis of the received status information. For instance, when the leak information indicates a high leakage rate of fuel from the hydrogen fuel tank, and/or when the state information indicates a low quantity of fuel in the tank and/or a long distance to the nearest runway, the method may comprise reducing a rate at which fuel is moved from the hydrogen fuel tank. This may conserve a quantity of hydrogen fuel in the hydrogen fuel tank.

Optionally, when the state information is representative of the temperature in the hydrogen fuel tank, the method comprises causing heating of the hydrogen fuel in the hydrogen fuel tank to provide a desired temperature in the hydrogen fuel tank. This may allow the temperature to be maintained within a desired range, and may ensure that pressure in the hydrogen fuel tank remains higher than that of the external atmosphere, whilst not being higher than necessary.

Liquid hydrogen in the hydrogen fuel tank may act as a heat sink to reduce a temperature of gaseous hydrogen in an ullage space of the hydrogen fuel tank, which may cause some of the gaseous hydrogen to condense. This may lead to a reduction in pressure in the gaseous hydrogen. As such, when the state information is representative of the ratio of liquid to gaseous hydrogen fuel in the hydrogen fuel tank, the method may comprise causing heating of the hydrogen fuel in the hydrogen fuel tank to a greater extent the more liquid hydrogen is present in the hydrogen fuel tank relative to gaseous hydrogen. This may provide a greater pressure in the hydrogen fuel tank, a greater evaporation of liquid hydrogen in the hydrogen fuel tank, and/or reduced condensation of gaseous hydrogen in the hydrogen fuel tank. This may ensure that pressure in the hydrogen fuel tank remains higher than that of the external atmosphere, whilst not being higher than necessary.

Optionally, when the state information is representative of a movement of the aircraft, the method comprises causing heating of the hydrogen fuel in the hydrogen fuel tank based on the movement of the aircraft. Movement of the aircraft, and particularly movement that causes a change in attitude of the aircraft, may cause movement of liquid hydrogen fuel in the hydrogen fuel tank. This may, in turn, lead to increased mixing of the liquid hydrogen fuel with gaseous hydrogen fuel in the hydrogen fuel tank, thereby increasing a cooling of the gaseous hydrogen fuel and/or leading to increased condensation of the gaseous hydrogen fuel. The method may comprise causing heating of the hydrogen fuel in the hydrogen fuel tank to a greater or lesser extent when the state information represents a respective greater or lesser movement of the aircraft. This may ensure that pressure in the hydrogen fuel tank remains higher than that of the external atmosphere, whilst not being higher than necessary.

Optionally, the flight status of the aircraft comprises an altitude of the aircraft. Optionally, when the state information is representative of the flight status of the aircraft, the method may comprise causing an increase in pressure in the hydrogen fuel tank, and/or causing heating of the hydrogen fuel in the hydrogen fuel tank, so that the pressure is greater than an atmospheric pressure at that altitude. It will be appreciated that the atmospheric pressure will increase as the aircraft descends, and so the pressure in the hydrogen fuel tank will need to be correspondingly higher as the aircraft descends to reduce a likelihood of ingress of the external atmosphere into the hydrogen fuel tank. Optionally, the method comprises receiving information representative of an ambient atmosphere at a runway approached by the aircraft. Optionally, the method comprises control of the pressure in the hydrogen fuel tank to provide a desired flow rate of hydrogen fuel from the hydrogen fuel tank to ensure that there is sufficient fuel remaining in the fuel tank when the aircraft lands on the runway to provide a pressure that is higher than the pressure of the external atmosphere at the runway.

Optionally, when the state information is representative of the flight status of the aircraft, and indicates that the aircraft has landed, and/or that the aircraft has been vacated, the method may comprise causing an increase in pressure in the hydrogen fuel tank, and/or causing heating of the hydrogen fuel in the hydrogen fuel tank, to the greatest extent possible.

Optionally, the state information is received from one or more state sensors of the hydrogen fuel system and/or the aircraft, such as: a pressure sensor external to the hydrogen fuel tank; a fuel level gauge in the hydrogen fuel tank; a fuel consumption sensor of the aircraft; a temperature sensor in the hydrogen fuel tank; and/or an attitude, altitude, movement and/or sensor of the aircraft.

Optionally, the method is a computer-implemented method, and wherein: the receiving the leak information comprises a control system receiving the leak information, and the causing the control of the pressure in the hydrogen fuel tank comprises the control system causing the control of the pressure in the hydrogen fuel tank.

Optionally, to cause control of the pressure in the hydrogen fuel tank, the computer-implemented method comprises the control system causing heating of the hydrogen fuel in the hydrogen fuel tank. Optionally, the control system causing heating of the hydrogen fuel in the hydrogen fuel tank comprises the control system causing the hydrogen fuel to pass from the hydrogen fuel tank through the heat exchanger, where provided, and back to the hydrogen fuel tank. Optionally, the control system causing heating of the hydrogen fuel in the hydrogen fuel tank comprises the control system issuing a command to the pump, to cause the pump to pump the hydrogen fuel through the heat exchanger and back to the hydrogen fuel tank. Optionally, the computer-implemented method comprises the control system sending a command to the one or more valves, to control an opening degree of the one or more valves, such as to control the flow of hydrogen fuel from the hydrogen fuel tank through the heat exchanger and back to the hydrogen fuel tank.

Optionally, where the method comprises causing heating of the hydrogen fuel in the hydrogen fuel tank by causing an increase in a thermal conductivity of the hydrogen fuel tank, this is achieved by the control system issuing a command to the vacuum breather valve, to cause the vacuum breather valve to open. In this way, the causing the increase in the thermal conductivity of the hydrogen fuel tank comprises relieving the vacuum in the space between the inner wall and the outer wall of the fuel tank. Optionally, the method comprises dousing the hydrogen fuel in the tank with a cryogenic inert gas, such as liquid nitrogen. This may cause a reduction in temperature of the gaseous hydrogen fuel in the fuel tank and cause the liquid nitrogen to boil, thereby to further increase the pressure in the hydrogen fuel tank. This may provide a positive pressure difference for a greater period of time than without providing the inert gas, such as to allow the aircraft to land and/or passengers to disembark before the external atmosphere is able to ingress into the hydrogen fuel tank. This may also, or alternatively, increase a flow rate of hydrogen fuel out of the tank, thereby to further reduce a mass of hydrogen fuel remaining in the tank. Dousing the hydrogen fuel in the tank with the cryogenic inert gas may, for instance, be performed in the event that controlling the pressure in the hydrogen fuel tank by heating the hydrogen fuel, to the desired extent, is no longer possible. This may be the case when there is only (or mostly) gaseous hydrogen remaining in the hydrogen fuel tank. This may improve a longevity of the hydrogen fuel tank and/or the hydrogen fuel system.

Optionally, the receiving the state information comprises the control system receiving the state information. Optionally, the causing the control of the pressure in the hydrogen fuel tank based on the received state information comprises the control system causing the control of the pressure in the hydrogen fuel tank based on the received state information. The causing the control of the pressure in the hydrogen fuel tank may be in any way as described above.

Optionally, the control system comprises one or more controllers, each configured to perform a respective one or more actions of the method. For instance, the control system may comprise a single controller configured receive the leak information and cause the control of the pressure in the hydrogen fuel tank based on the leak information. Alternatively, the control system may comprise a first controller configured to receive the leak information, and a second controller configured to cause the control of the pressure in the hydrogen fuel tank, such as in response to leak information received from the first controller, or in response to an instruction from the first controller based on the leak information.

It will be appreciated that any of the actions described above for the method of the first aspect may be performed by the control system. Moreover, any of the optional features of and/or advantages ascribed to the method may similarly apply to when the method is a computer-implemented method.

A second aspect of the present invention provides a non-transitory computer-readable storage medium comprising instructions which, when executed by a processor, cause the processor to perform the method of the first aspect.

A third aspect of the present invention provides a hydrogen fuel control system comprising one or more processors configured to perform the method of the first aspect. Optionally, the hydrogen fuel control system is communicatively coupled to the non-transitory computer-readable storage medium of the second aspect, and the processor is configured to execute the instructions. Optionally, the hydrogen fuel control system comprises the control system of the method of the first aspect.

The control system may comprise and/or benefit from any of the optional features of and/or advantages ascribed to the method of the first aspect or the non-transitory computer-readable storage medium of the second aspect.

A fourth aspect of the present invention provides a hydrogen fuel system comprising the hydrogen fuel control system of the third aspect and the hydrogen fuel tank. The hydrogen fuel system may comprise and/or benefit from any of the optional features of and/or advantages ascribed to the data processing method of the first aspect, the non-transitory computer-readable storage medium of the second aspect or the hydrogen fuel control system of the third aspect.

In particular, the hydrogen fuel system may comprise any one or more of the components of the hydrogen fuel system described above in relation to the method of claim 1. For instance, the hydrogen fuel system may comprise the heat exchanger. The hydrogen fuel system may comprise a loop comprising the hydrogen fuel tank, the heat exchanger and the pump for pumping hydrogen fuel from the hydrogen fuel tank to the heat exchanger and back to the hydrogen fuel tank. Optionally, the hydrogen fuel system comprises one or more valves for controlling flow in the loop.

Optionally, the hydrogen fuel system comprises a vent system arranged to pass hydrogen fuel from the hydrogen fuel tank to an atmosphere external to the hydrogen fuel tank, such as external to the aircraft. Optionally, the vent system comprises a first vent line comprising a pressure relief valve that is operable, such as by the hydrogen fuel control system, and/or passively in response to a pressure detected in the hydrogen fuel tank, to permit or prevent hydrogen fuel passing through the first vent line. Optionally, the vent system comprises a second vent line comprising a rupturable valve that is rupturable to permit hydrogen fuel to flow from the hydrogen fuel tank through the second vent line.

Optionally, the hydrogen fuel system comprises any of the state sensors and/or leak detection sensors described above.

Optionally, the information indicative of the leak received by the data processing unit comprises a mass flow rate through the vent system. This may indicate that hydrogen fuel is leaking through the vent system, such as due to a failure of the pressure relief valve and/or a rupture of the rupturable valve. In this way, the method and/or data processing unit may provide a way to cause control of a pressure and/or a quantity of hydrogen fuel in the hydrogen fuel tank in the event of such a failure or rupture.

It will be appreciated that the leak may be in any part of the hydrogen fuel system, such as in the fluid loop, the heat exchanger, the pump, and/or the valves for controlling the flow of fuel through the fluid loop. Indeed, in general, the invention is particularly beneficial when the leak is through a portion of the hydrogen fuel system that is unable to be isolated from the hydrogen fuel tank, such as components immediately downstream of the hydrogen fuel tank and/or the hydrogen fuel tank itself. In such cases, the pressure and/or quantity of fuel in the hydrogen fuel tank may be caused to be controlled in a manner that prolongs an integrity of the hydrogen fuel tank, and ensures that there is sufficient fuel in the hydrogen fuel tank to complete a current mission of the aircraft (e.g., a current flight, such as up to a point where passengers have been disembarked from the aircraft), thereby improving the reliability of the hydrogen fuel system compared to a hydrogen fuel system in which no such control is achieved.

A fifth aspect of the present invention provides an aircraft comprising the non-transitory computer-readable storage medium of the second aspect, the hydrogen fuel control system of the third aspect, and/or the hydrogen fuel system the fourth aspect.

Optionally, the aircraft comprises an engine and/or power generator, and the hydrogen fuel system is configured to supply fuel from the hydrogen fuel tank to the engine to power the engine and/or power generator.

The aircraft may comprise and/or benefit from any of the optional features of, and/or advantages ascribed to, the method of the first aspect, the non-transitory computer-readable storage medium of the second aspect, the hydrogen fuel control system of the third aspect, and/or the hydrogen fuel system of the fourth aspect.

### BRIEF DESCRIPTION OF THE DRAWINGS

Embodiments of the invention will now be described, by way of example only, with reference to the accompanying drawings, in which:
Figure 1 shows an example aircraft;
Figure 2 shows a schematic diagram of an example hydrogen fuel system of the aircraft shown in Figure 1; and
Figure 3 shows a flow diagram of an example method of controlling pressure in the hydrogen fuel system shown in Figure 2.

### DETAILED DESCRIPTION

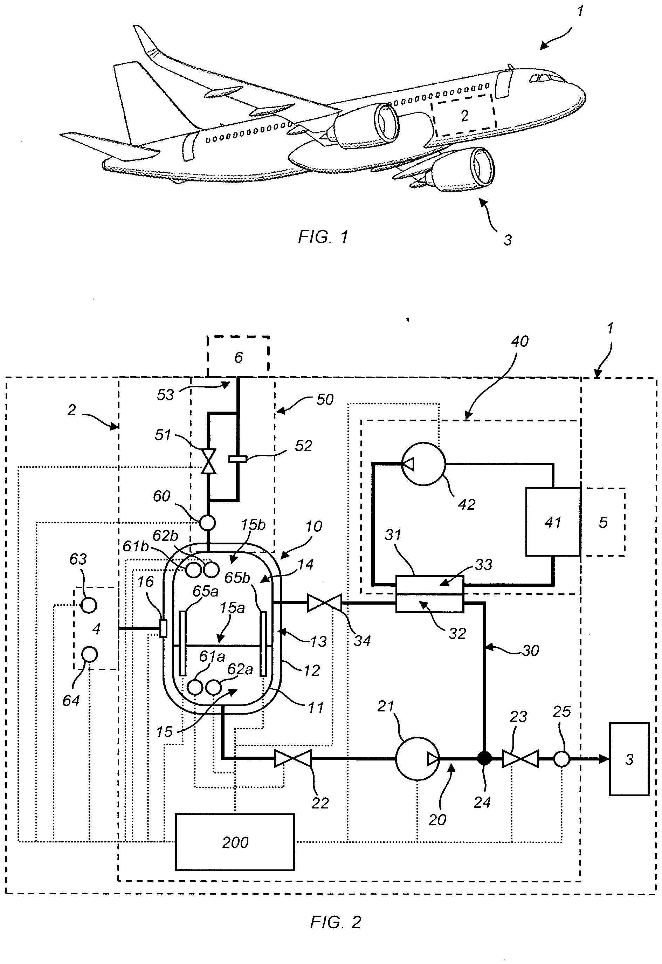

Figure 1 shows an aircraft 1 comprising an engine 3 and a hydrogen fuel system 2 for supplying hydrogen fuel to the engine 3. The engine 3 is a combustion engine configured to combust the hydrogen fuel. It will be appreciated that, in other examples, the engine 3 may comprise a hydrogen fuel cell. Such a hydrogen fuel cell may be configured to convert hydrogen and oxygen into water to generate electricity. The electricity may be used to power an electric motor to propulsively power the aircraft, or to supply electricity to other (non-propulsive) electronic components of the aircraft.

As shown in Figure 2, the hydrogen fuel system 2 comprises a hydrogen fuel tank 10, which here is a double-walled pressure vessel comprising an inner wall 11, an outer wall 12 and a vacuum in an interspace 13 between the inner wall 11 and the outer wall 12. The inner wall 11 defines a chamber 14 in which the hydrogen fuel 15 is stored in a cryogenic form. In particular, the hydrogen fuel 15 comprises a liquid component defining a fuel level 15a in the chamber 14, and a gaseous component occupying an ullage space 15b above the fuel level 15a. The vacuum in the interspace 13 insulates the hydrogen fuel tank 10, to limit a transfer of heat between the hydrogen fuel 15 in the hydrogen fuel tank 10 and an external atmosphere 4 external to the hydrogen fuel tank 10 (and external to the hydrogen fuel system 2). The hydrogen fuel tank 10 also comprises a vacuum breather valve 16 fluidically coupled between the interspace 13 and the external atmosphere 4 external to the hydrogen fuel tank 10.

The hydrogen fuel system 2 comprises a fuel line 20 comprising a pump 21 and a fuel line valve 22 fluidically coupled between the pump 21 and the hydrogen fuel tank 10. The hydrogen fuel system 2 also comprises a heat exchange line 30, which is fluidically coupled between the hydrogen fuel tank 10 and the fuel line 20 downstream of the pump 21. The hydrogen fuel system 2 comprises a metering valve 23 upstream of the engine 3 and downstream of a junction 24 between the fuel line 20 and the heat exchange line 30, and an engine flow sensor 25 downstream of the metering valve 23.

The hydrogen fuel system 2 also comprises a heat exchanger 31 comprising a fuel side 32 fluidically coupled in the heat exchange line 30, and a heat exchange valve 34 fluidically coupled in the heat exchange line 30 between the fuel side 32 and the hydrogen fuel tank 10. The heat exchanger 31 also comprises a heat exchange side 33 fluidically coupled in a heat exchange system 40 of the aircraft 1. The heat exchange system 40 comprises a further heat exchanger 41 configured to exchange heat between a heat exchange medium, specifically a water-glycol mix, in the further heat exchanger 41 and an aircraft atmosphere 5 external to the hydrogen fuel system 2. The heat exchange system 40 also comprises a heat exchange pump 42 fluidically coupled between the further heat exchanger 41 and the heat exchange side 33 of the heat exchanger 31.

The hydrogen fuel system 2 also comprises a vent system 50 fluidically coupling the chamber 14 of the hydrogen fuel tank 10 to a vent system outlet 53 that opens into an ambient atmosphere 6 external to the aircraft 1. The vent system 50 comprises a relief valve 51 configured to open in response to a pressure of the hydrogen fuel 15 in the chamber 14 exceeding a threshold pressure, to relieve pressure in the chamber 14. The vent system 50 also comprises a rupturable valve 52 fluidically coupled, in parallel with the vent valve 51, between the chamber 14 and the vent line outlet 53. The rupturable valve 52 is configured to irreversibly rupture in the event of a pressure of the hydrogen fuel 15 in the chamber 14 exceeding a further threshold pressure, higher than the threshold pressure.

The hydrogen fuel system 2 also comprises a flow rate sensor 60 fluidically coupled to detect a flow rate of hydrogen fuel from the hydrogen tank 10 through the vent system 50. The hydrogen fuel system 2 also comprises a first temperature sensor 61a, a second temperature sensor 61b, a first pressure sensor 62a, a second pressure sensor 62b, and fluid level sensors 65a, 65b in the chamber 14 of the hydrogen fuel tank 10 to detect, respectively, a first and second temperature, a first and second pressure, and a fuel level 15a of the hydrogen fuel 15 in the hydrogen fuel tank 10. The first temperature and pressure sensors 61a, 62a are located towards an opposite end of the hydrogen fuel tank 10 to the second temperature and pressure sensors 61b, 62b. Providing first and second temperature and pressure sensors 61a, 61b, 62a, 62b arranged as such allows the temperature and pressure of both liquid and gaseous hydrogen fuel to be sensed. For instance, when the orientation of the hydrogen fuel tank 10 and the fuel level 15a in the hydrogen fuel tank 10 are as shown in Figure 2, then the first temperature and pressure sensors 61a, 62a are submerged in liquid hydrogen fuel to detect a temperature of the liquid hydrogen fuel. In contrast, the second temperature and pressure sensors 61b, 62b are located in the ullage space 15a, above the fuel level 15a, in Figure 2, and so detect a temperature of gaseous hydrogen fuel in the ullage space 15b. Moreover, providing more than one fluid level sensor 65a, 65b allows the fuel level 15a to be detected even with an irregularly-shaped hydrogen fuel tank 10 under different orientations. The aircraft 1 comprises an external pressure sensor 63 and a hydrogen sensor 64 in the external atmosphere 4 for detecting, respectively, a pressure and hydrogen concentration in the external atmosphere 4.

The hydrogen fuel system 2 also comprises a controller 200 communicatively coupled to each of the pump 21, the fuel valve 22, the heat exchange valve 34, the heat exchange pump 42, the flow rate sensor 60, the first and second temperature sensors 61a, 61b, the first and second pressure sensors 62a, 62b, the fluid level sensor 65, the external pressure sensor 63 and the hydrogen sensor 64.

The controller 200 is configured to cause operation of the pump 21 to pump hydrogen fuel from the hydrogen fuel tank 10 to the engine 3 via the fuel line 20.The controller 200 is configured to cause operation of the metering valve 23 to control a flow rate of fuel towards the engine, based on signals received from the engine flow sensor 25. In particular, the controller 200 is configured to cause operation of the metering valve 23 to provide a mass flow rate of hydrogen fuel through the fuel line 20 that is greater than the sum of the mass flow rate of hydrogen fuel through the heat exchange line 30 and the mass flow rate of hydrogen fuel through the metering valve 23 towards the engine 3. The controller 200 is also configured to cause operation of the fuel valve 22 to isolate the hydrogen fuel tank 10 from the pump 21 (and thus also components downstream of the pump 21 relative to the hydrogen fuel tank 10, including the engine 3 and the heat exchanger 31).

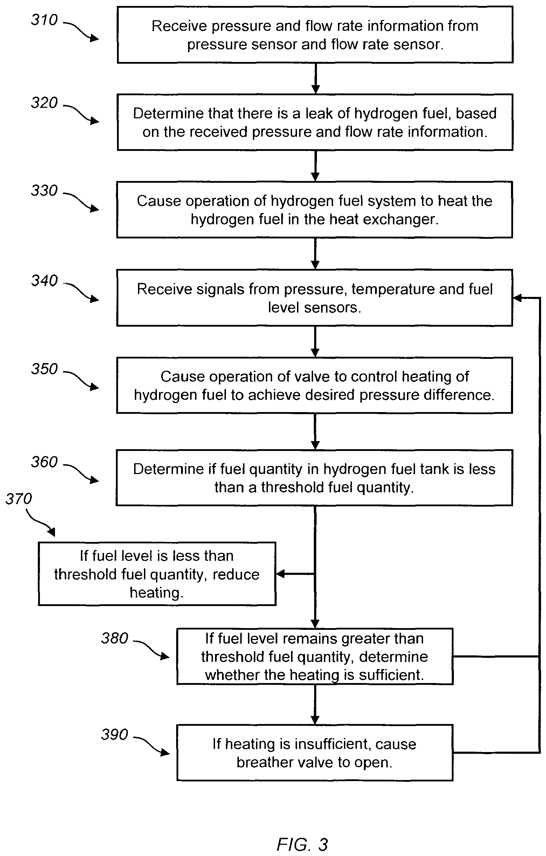

The controller 200 is further configured to cause operation of various components of the fuel system 2 to which it is communicatively coupled to control a pressure of the hydrogen fuel 15 in the hydrogen fuel system, as will now be described in relation to an example method 300 shown in Figure 3.

The example method 300 comprises the controller 300 receiving 310 pressure and flow rate information from the flow rate sensor 60 and the first and/or second pressure sensor 61a, 61b. The flow rate information comprises a flow rate of fuel from the chamber 14 to the ambient atmosphere 6 through the vent system 50, and the pressure information comprises a pressure of the hydrogen fuel 15 in the hydrogen fuel tank. The controller 200 is configured to determine 320 that there is a leak of hydrogen fuel 15 from the hydrogen fuel system 2 when the flow rate of fluid through the vent system 50 is non-zero while the pressure sensed by the pressure sensor 61 is lower than the threshold pressure of the vent valve 51. This indicates that fuel is passing through the vent system 50 when the pressure in the hydrogen fuel tank 10 is not high enough to normally cause the relief valve 51 to open. In turn, this may indicate, for example, that the vent valve 51 has become stuck in an "open" position, and/or that the rupturable valve 52 has ruptured, and thus that hydrogen fuel is "leaking" through the vent valve 51 and/or the rupturable valve 52.

The controller 200 is configured, based on the determination that there is a leak of hydrogen fuel 15 from the hydrogen fuel system 2, to cause 330 operation of the fuel line valve 22, the pump 21, the heat exchange pump 42 and the heat exchange valve 34. In particular, the controller 200 commands the fuel line valve 22 and the heat exchange valve 34 to open, commands the metering valve 23 to restrict a flow of hydrogen fuel towards the engine 3, and commands the pump 21 to pump hydrogen fuel from the hydrogen fuel tank 10 through the fuel side 32 of the heat exchanger 31 and back to the hydrogen fuel tank 10. The controller 200 also commands the heat exchange pump 42 to pump the heat exchange medium in the heat exchange system 40 through the heat exchange side 33 of the heat exchanger 31. This causes heat to be transferred from the heat exchange medium to the hydrogen fuel flowing through the heat exchanger 31, to cause heating of the hydrogen fuel. In particular, the hydrogen fuel 15 is stored in the hydrogen fuel tank 10 under cryogenic conditions, and the heat exchange medium is at a temperature closer to that in the aircraft atmosphere 5, due to heat exchange between the heat exchange medium and the aircraft atmosphere 5 in the further heat exchanger 41. The aircraft atmosphere 5 has a temperature at or above a temperature of the ambient atmosphere 6 external to the aircraft 1, which may be greater than -70 °C during a flight of the aircraft 1, while the cryogenic hydrogen fuel 15 in the hydrogen fuel tank 10 is at liquid or gaseous hydrogen cryogenic temperatures. Thus, the hydrogen fuel that is passed through the fuel side 32 is at a lower temperature than the heat exchange medium that is passed through the heat exchange side 33. This causes heating of the hydrogen fuel in the heat exchanger 31.

This heated hydrogen fuel is then passed back to the hydrogen fuel tank 10 to cause heating of the hydrogen fuel 15 in the hydrogen fuel tank 10. The heating of hydrogen fuel 10 in the hydrogen fuel tank 10 causes an increase in pressure of the hydrogen fuel 15 in the hydrogen fuel tank. In particular, heating of the hydrogen fuel 15 causes some of the liquid hydrogen fuel to evaporate, which increases an amount (and thus a pressure of) the gaseous hydrogen fuel in the ullage space 15b. Heating of the gaseous hydrogen fuel also causes an increase in pressure of the gaseous hydrogen fuel.

The controller 200 then receives 340 signals from the first and second temperature sensors 61a. 62b, the first and second pressure sensors 62a, 62b, the external pressure sensor 63 and the fuel level sensors 65a, 65b, these signals representative of, respectively, first and second temperatures of the hydrogen fuel 15 in the hydrogen fuel tank 10, first and second pressures of the hydrogen fuel 15 in the hydrogen fuel tank 10, a pressure of the external atmosphere 4 external to the hydrogen fuel system 2, and the fuel level 15a of the liquid component of the hydrogen fuel in the hydrogen fuel tank 10.

The controller 200 then causes 350 operation of the heat exchange valve 34 downstream of the heat exchanger 31, in particular by controlling an opening degree of the heat exchange valve 34, to control a flow rate of hydrogen fuel through the heat exchanger 31. In this way, the controller controls an amount of heating of the hydrogen fuel flowing through the heat exchanger 31 and back to the hydrogen fuel tank 10. In particular, the controller 200 controls the amount of heating of the hydrogen fuel to provide a desired pressure difference between the pressure of the hydrogen fuel 15 in the hydrogen fuel tank 10 and the pressure of the external atmosphere 4 into which the hydrogen fuel 15 is leaking. More specifically, the controller controls operation of the heat exchange valve 34 to cause heating of the hydrogen fuel 15 in the hydrogen fuel tank 10 such that a pressure of the hydrogen fuel 15 in the hydrogen fuel tank 10 is sufficiently higher than the pressure of the external atmosphere 4 into which the hydrogen fuel 15 is leaking, to prevent an ingress of the external atmosphere 4 into the hydrogen fuel tank 10.

The controller 200 is configured to cause 350 the operation of the heat exchange valve 34 to provide such a positive pressure difference until an amount of the hydrogen fuel 15 in the hydrogen fuel tank 10 drops below a threshold fuel quantity. The controller 200 is configured to determine 360 the quantity of fuel in the hydrogen fuel tank 10 based on the signals from the temperature sensor 61, the pressure sensor 62, and the fuel level sensors 65a, 65b. In particular, the controller 200 is configured to determine the quantity of fuel based on the amount of liquid hydrogen fuel remaining in the tank and the temperature and pressure of the remaining liquid hydrogen fuel (using the fuel level sensors 65a, 65b, the first temperature sensor 61a, and the first pressure sensor 62a), and the amount of gaseous hydrogen fuel in the tank based on the temperature and pressure of gaseous hydrogen fuel in the hydrogen fuel tank 10 (sensed using the second temperature sensor 61b and second pressure sensor 62b) in combination with the ideal gas law.. More specifically, with knowledge of the fuel level 15 of liquid hydrogen fuel in the hydrogen fuel tank 10, a volume of the liquid and gaseous hydrogen fuel in the hydrogen fuel tank 10 can be deduced. This volume can be combined with the pressure and temperature of the gaseous and liquid hydrogen fuel, and the ideal gas law for the gaseous hydrogen fuel, to determine the number of moles of hydrogen fuel in the hydrogen fuel tank 10. In other examples, further sensors, such as further fuel level, temperature and/or pressure sensors, and/or other types of sensor, such as density and/or permittivity sensors, may be provided in the hydrogen fuel tank 10. Increasing the number of sensors, and/or providing different types of sensor, in the hydrogen fuel tank 10 may improve an accuracy of the determination of the quantity of liquid and/or gaseous hydrogen fuel in the hydrogen fuel tank 10.

The controller 200 is then configured to cause 370 a reduction in a rate of heating of the hydrogen fuel, in particular by commanding at least the heat exchange valve 34 to close, or partially close, when the quantity of fuel drops below the threshold fuel quantity. By controlling the heating (and pressure) of the hydrogen fuel 15 in this way, less hydrogen fuel may be present in the hydrogen fuel tank at a time when the atmosphere is able to ingress into the hydrogen fuel than if the heating (and pressure) weren't controlled. Such ingress may occur, for instance, as the pressure difference between the pressure of the external atmosphere 4 and the pressure of the hydrogen fuel 15 in the hydrogen fuel tank 10 approaches, reaches, or drops below zero. Moreover, because of the reduced amount of hydrogen fuel 15 in the hydrogen fuel tank 10, an amount of energy released in a reaction of hydrogen fuel in the hydrogen fuel tank with the atmosphere, in the event that some of the atmosphere 4 ingresses into the hydrogen fuel tank 10, is similarly reduced. In this way, the threshold fuel quantity is a maximum allowable fuel quantity for successful reaction attenuation. In other words, the threshold fuel quantity is a quantity of fuel below which an energy released in a reaction of the external atmosphere 4 with the hydrogen fuel in the hydrogen fuel tank 10 is within an acceptable limit, based on structural limitations of the hydrogen fuel tank 10.

The controller 200 in this example is also configured, if the quantity of fuel in the hydrogen fuel tank 10 is not yet less than the threshold fuel quantity, to determine 380 whether the hydrogen fuel 15 in the hydrogen fuel tank 10 has been heated as expected. In particular, controller 200 determines whether the temperature sensed by the temperature sensor 61 is within an expected temperature range following the heating, and whether the pressure difference is within an expected pressure difference range following the heating. If the temperature and/or pressure is not within the respective expected range, the controller 200 is configured to cause 390 operation of the vacuum breather valve 16, in particular by commanding the vacuum breather valve 16 to open, to cause the external atmosphere 4 to enter the interspace 13 in the fuel tank 10. This relieves the vacuum in the interspace 13, thereby increasing a rate of heat transfer from the external atmosphere 4 to the hydrogen fuel 15 in the hydrogen fuel tank 10 through the interspace 13. This causes an increased rate of heating of the hydrogen fuel 15 in the hydrogen fuel tank. In this way, the vacuum breather valve 16 is operable by the controller 200 to supplement the heating provided by the heat exchanger 31, or as a backup in the event that the heat exchanger 31 is not heating the hydrogen fuel 15 as intended.

If, alternatively, the controller 200 determines that the temperature is in the desired temperature range and the pressure difference is in the desired pressure range, then the process loops back to the action of receiving 340 signals from the sensors. This allows closed-loop control of the heating (and pressure) of hydrogen fuel 15 in the hydrogen fuel tank 10, with the heating being adjusted by the controller 200 as the fuel level 15a drops and the pressure in the hydrogen fuel tank 10 reduces over time.

It will be appreciated that the controller 200 may control the pressure in the hydrogen fuel tank 10 in other ways. For instance, the controller 200 may determine an amount of energy that would be released in a reaction between the external atmosphere and the hydrogen fuel in the hydrogen fuel tank (a "reaction energy") based on the quantity of hydrogen fuel in the hydrogen fuel tank. The controller may control the pressure in the hydrogen fuel tank until the reaction energy is below a reaction energy threshold for the fuel tank 10. In some examples, the controller 200 is configured to determine a time until the reaction energy drops below the reaction energy threshold. This determination may be achieved using the determined quantity of fuel, a leakage rate of hydrogen fuel from the hydrogen fuel tank (e.g., as sensed by the flow rate sensor 60), and a reaction energy model of reaction energy as a function of the quantity of hydrogen fuel in the hydrogen fuel tank.

As noted above, the controller 200 controls the amount of heating of the hydrogen fuel to provide a desired pressure difference between the pressure of the hydrogen fuel 15 in the hydrogen fuel tank 10 and the pressure of the external atmosphere 4 into which the hydrogen fuel 15 is leaking. In some examples, the controller is configured to control the heating of the hydrogen fuel such that a positive pressure difference is maintained until the end of the mission, and in particular until the aircraft has landed and all passengers have disembarked. For instance, the controller may control the pressure difference to provide a flow rate of hydrogen fuel from the hydrogen fuel tank that ensures that sufficient hydrogen fuel is present in the hydrogen fuel tank to allow a positive pressure difference can be maintained until the end of the mission.

In some examples, the controller 200 is configured to receive signals from a movement sensor of the aircraft 1. Movement of the aircraft may cause a corresponding movement of the hydrogen fuel 15 in the hydrogen fuel tank 10. Movement of the hydrogen fuel may cause increased mixing of the liquid and gaseous components of the hydrogen fuel 15 in the hydrogen fuel tank 10. The liquid hydrogen fuel may act as a heat sink, particularly when more liquid than gaseous hydrogen fuel is present in the hydrogen fuel tank, so that such mixing causes condensation of some of the gaseous hydrogen in the hydrogen fuel tank 10. This may, in turn, reduce a pressure of the gaseous hydrogen fuel in the ullage space 15b. As such, the controller 200 may be configured to increase an amount of heating of the hydrogen fuel in response to an increase in movement of the aircraft 1 detected by the movement sensor.

In other examples, the hydrogen fuel system 2 comprises a heat exchanger heating element configured to cause heating of hydrogen fuel passing through the heat exchanger 31, and the causing heating of the hydrogen fuel 15 comprises the controller 200 causing operation of the heat exchanger heating element. In some such examples, the heat exchanger system 20 may be omitted, and heating may be provided solely by the heat exchanger heating element. In other examples, the heat exchanger heating element supplements heating provided by the heat exchanger system 20. In other examples, the hydrogen fuel system 2 comprises a fuel tank heating element located in the hydrogen fuel tank 10 and operable by the controller 200 to cause direct heating of the hydrogen fuel in the hydrogen fuel tank 10. Again, such heating could be in addition to, or instead of, heating the hydrogen fuel 15 using the heat exchanger 31.

In another example, to control the pressure in the hydrogen fuel tank 10, the hydrogen fuel system 20 may comprise a pressurised inert gas source that is fluidically coupled to the chamber 14 via a gas valve. The controller 200 may be configured to cause operation of the gas valve to cause pressurised inert gas to pass into the chamber 14, thereby to increase a pressure in the chamber 14, and in particular increase a pressure of the hydrogen fuel 15 in the chamber 14.

The heat exchange system 40 described above comprises a further heat exchanger 41 configured to exchange heat between a water-glycol mix in the further heat exchanger 41 and an aircraft atmosphere 5 external to the hydrogen fuel system 2. In other examples, the heat exchange medium in the heat exchange system 40 is instead hydrogen fuel, such as unconsumed hydrogen fuel received from the engine 3 or a fuel cell. Such hydrogen fuel will be at a higher temperature than fuel in the hydrogen fuel tank, and thus in the heat exchange side 33 of the heat exchanger 31. In some such examples, the heat exchange pump 42 and/or further heat exchanger 41 may not be provided.

It will also be appreciated that the controller 200 may determine 320 that there is a leak of hydrogen fuel from the hydrogen fuel system 2 in any other suitable way. For instance, the controller 200 may determine that there has been a leak based on signals from the hydrogen concentration sensor 63 that are indicative of a presence of hydrogen fuel in the external atmosphere 4. In some examples, the system may comprise a separate leak detection system comprising, for instance, one or more of the flow rate sensor 60, the external pressure sensor 63 and the hydrogen sensor 64, as well as a leak detection controller configured to determine that there has been a leak based on information received from the flow rate sensor, the external pressure sensor 63 and/or the hydrogen sensor 64. The leak information received by the controller 200 may be received from the leak detection controller. For instance, the controller 200 may determine that there has been a leak based on a signal indicative of a leak that is received from the leak detection controller. In some examples, the hydrogen fuel system 2 comprises a hydrogen fuel control system comprising the controller 200 and the leak detection controller.

In some examples, the aircraft atmosphere 5 comprises the external atmosphere 4.

In some examples, in the event of a leak from any one of the fuel line 20, the heat exchange line 31, the fuel line valve 22, the pump 21, the heat exchanger 31, or the heat exchange valve 34, the controller 200 may, instead of causing heating of the hydrogen fuel using the heat exchanger 31, cause operation of the vacuum breather valve 16 to relieve the vacuum in the interspace 13. This may permit heating of the hydrogen fuel 15 in the hydrogen fuel tank 10 without requiring the hydrogen fuel 15 to be passed through the leaky component(s).

Other variations and modifications to the aircraft 1, fuel system 2, and/or method 300 within the scope of the appended claims will be evident to the skilled person.

It is to be noted that the term "or" as used herein is to be interpreted to mean "and/or", unless expressly stated otherwise.

## Claims

1. A method of controlling a pressure in a hydrogen fuel tank of an aircraft hydrogen fuel system, the hydrogen fuel tank storing hydrogen fuel, the method comprising:
receiving leak information indicative of a leak of hydrogen fuel from the hydrogen fuel system; and
based on the leak information received, causing control of the pressure in the hydrogen fuel tank.

2. The method of claim 1, wherein the causing control of the pressure in the hydrogen fuel tank comprises causing the pressure in the hydrogen fuel tank to exceed an external pressure of an atmosphere into which the hydrogen fuel is leaking.

3. The method of claim 2, comprising causing the pressure in the hydrogen fuel tank to exceed the external pressure of the atmosphere into which the hydrogen fuel is leaking while a quantity of the hydrogen fuel in the hydrogen fuel tank remains above a threshold quantity.

4. The method of any one of claims 1 to 3, wherein the causing control of the pressure in the hydrogen fuel tank comprises causing heating of the hydrogen fuel in the hydrogen fuel tank.

5. The method of claim 4, wherein the causing heating of the hydrogen fuel in the hydrogen fuel tank comprises causing hydrogen fuel to pass from the hydrogen fuel tank through a heat exchanger and back to the hydrogen fuel tank.

6. The method of claim 4 or claim 5, wherein the causing heating of the hydrogen fuel in the hydrogen fuel tank comprises causing an increase in a thermal conductivity of the hydrogen fuel tank .

7. The method of claim 6, wherein the hydrogen fuel tank comprises an inner wall, an outer wall, and a vacuum in a space between the inner wall and the outer wall, and the causing the increase in the thermal conductivity of the hydrogen fuel tank comprises relieving the vacuum in the space.

8. The method of any one of claims 1 to 7, wherein the leak information received is indicative of any one or more of:
a flow rate of hydrogen fuel from the hydrogen fuel tank;
a pressure of hydrogen fuel in the hydrogen fuel tank; and
a concentration of hydrogen external to the hydrogen fuel system.

9. The method of any one of claims 1 to 8, wherein the method comprises receiving state information representative of an operational state of the hydrogen fuel tank, the hydrogen fuel system and/or the aircraft comprising the aircraft hydrogen fuel system; and
causing the control of the pressure in the hydrogen fuel tank based on the received state information.

10. The method of claim 9, wherein the state information is indicative of any one or more of:
a pressure external to the hydrogen fuel tank;
a quantity of liquid and/or gaseous hydrogen fuel in the hydrogen fuel tank;
a rate of consumption of hydrogen fuel in the hydrogen fuel tank by a consumer unit of the aircraft;
a temperature in the hydrogen fuel tank;
a flight status of the aircraft; and
a movement or anticipated movement of the aircraft.

11. The method of any one of claims 1 to 10, wherein the method is a computer-implemented method, and wherein:
the receiving the leak information comprises a control system receiving the leak information, and
the causing the control of the pressure in the hydrogen fuel tank comprises the control system causing the control of the pressure in the hydrogen fuel tank.

12. A non-transitory computer-readable storage medium comprising instructions which, when executed by a processor, cause the processor to perform the method of any one of claims 1 to 11.

13. A hydrogen fuel control system comprising one or more processors configured to perform the method of claim 11.

14. A hydrogen fuel system comprising the hydrogen fuel control system of claim 13 and the hydrogen fuel tank.

15. An aircraft comprising the non-transitory computer-readable storage medium of claim 12, the hydrogen fuel control system of claim 13, and/or the hydrogen fuel system of claim 14.
